# EUROPEAN PATENT APPLICATION

(11) **EP 4 516 577 A1**
(43) Date of publication of application: **05.03.2025**
(21) Application number: 23881593.0
(22) Date of filing: 28.09.2023
(51) Int. Cl.: B60L 58/10, B60L 53/14, B60R 16/023

(54) **BMS SLEEP WAKE-UP CIRCUIT AND METHOD, BMS AND ELECTRIC DEVICE**

(30) Priority: 24.10.2022 CN 202211302306
(71) Applicant: Contemporary Amperex Technology (Hong Kong) Limited, Hong Kong (HK)
(72) Inventor: CHEN, Weijie, Ningde, Fujian 352100 (CN); LI, Weiqiang, Ningde, Fujian 352100 (CN); YE, Fuming, Ningde, Fujian 352100 (CN)
(74) Representative: Gong, Jinping
(86) International application number: PCT/CN2023/122416
(87) International publication number: WO 2024/088014

(57) **Abstract**

A BMS sleep wake-up circuit and method, a BMS, and an electric device are provided. The BMS sleep wake-up circuit is provided with an enabling circuit (120). When a charging device (10) is plugged in, the enabling circuit (120) generates an enabling level of a preset duration to enable a wake-up chip (200) to activate to wake up a BMS in a sleeping state, and a control circuit (130) outputs a self-locking signal to keep a wake-up chip (200) waking up the BMS. Additionally, under the condition that the charging device (10) remains plugged in, the wake-up chip (200) is turned off after the self-locking signal is canceled, allowing the BMS to enter a sleeping state, solving the problem that a BMS cannot enter a sleeping state unless a charging device (10) is unplugged.

## Description

This application claims the priority to the Chinese Patent Application No. 202211302306.3, filed with China National Intellectual Property Administration on October 24, 2022 and entitled "BMS SLEEP WAKE-UP CIRCUIT AND METHOD, BMS, AND ELECTRIC DEVICE", which is incorporated herein by reference in its entirety.

### TECHNICAL FIELD

This application relates to the field of battery management, and specifically to a BMS sleep wake-up circuit and method, a BMS, and an electric device.

### BACKGROUND

Charging is an indispensable function for new energy electric vehicle products. For a charging interface of a national standard charging gun (such as AC_CP interface of an alternating current charging gun) from which a high level is input, the vehicle design requires that the charging gun should be able to wake up the battery management system (Battery Management System, BMS) after being plugged into the vehicle. Engineers focus on the plug-in wake-up function during design, and often overlook the need to support BMS to enter sleep while keeping the charging gun plugged. In this case, if the charging is completed or stopped without unplugging the charging gun, the BMS cannot enter sleep, thus increasing the lead-acid power consumption of the vehicle.

### SUMMARY

In view of the preceding problem, embodiments of this application provide a BMS sleep wake-up circuit and method, a BMS, and an electric device, which can solve the problem that a BMS cannot enter sleep unless a charging gun is unplugged.

According to a first aspect, an embodiment of this application provides a BMS sleep wake-up circuit, including:
a first detection port configured to be connected to a communication interface of a charging device when the charging device is plugged in;
an enabling circuit connected to the first detection port and a wake-up chip of a BMS, and configured to, when the charging device is plugged in, generate an enabling level of a preset duration based on a first level signal provided by the charging device, to enable the wake-up chip to activate to wake up the BMS in a sleeping state; and
a control circuit configured to, after the BMS is awakened, output a self-locking signal to the wake-up chip to maintain the wake-up chip in an activated state, and further configured to, under the condition that a sleep signal is received, stop outputting the self-locking signal to turn off the wake-up chip, allowing the BMS to enter a sleeping state.

In the technical solution of this embodiment of this application, when a charging device is plugged in, the enabling circuit is configured to generate the enabling level of the preset duration based on the first level signal provided by a communication interface of the charging device. The enabling level of the preset duration enables the wake-up chip to activate to wake up the BMS in a sleeping state (that is, activation). The control circuit outputs a self-locking signal to keep the wake-up chip waking up the BMS. Additionally, under the condition that the charging device remains plugged in, as the enabling level is maintained for only the preset duration, when sleep is needed later, the self-locking signal needs to be canceled, and then the wake-up chip is turned off, so that the BMS can enter a sleeping state, solving the problem in related art that the BMS cannot enter a sleeping state unless the charging device is unplugged. Furthermore, as the generated enabling level inevitably generates an edge signal, the wake-up chip triggered by either an edge or a level can meet the requirement of being able to sleep the BMS while the charging device remains plugged in, thereby reducing lead-acid consumption of the battery.

In some embodiments, the enabling circuit includes:
a detection module connected to the first detection port, and configured to output a first detection signal based on the first level signal provided by the charging device; and
an enabling module connected to the detection module, and configured to generate the enabling level of the preset duration based on the first detection signal and output the enabling level.

In the technical solution of this embodiment of this application, an embodiment of the enabling circuit is provided. The detection module detects the first level signal provided by the charging device, and the enabling module generates the enabling level of the preset duration based on the first level signal to activate the wake-up chip, so as to wake up the BMS in a sleeping state. The circuit is simple and reliable.

In some embodiments, the detection module includes a first switching transistor and a first resistor, where a control terminal of the first switching transistor is connected to the first detection port, a first terminal of the first switching transistor is connected to a first power source through the first resistor, a second terminal of the first switching transistor is grounded, the first terminal of the first switching transistor is connected to the enabling module, and the first switching transistor outputs the first detection signal under the driving of the first level signal.

In the technical solution of this embodiment of this application, an embodiment of the detection module is provided. The first level signal is, for example, a high-level signal, and the first detection signal is, for example, a low-level signal. The circuit has a simple and reliable structure and low costs.

In some embodiments, the detection module further includes a first energy storage element and a first unidirectional conduction element. An input terminal of the first unidirectional conduction element is connected to the first detection port, an output terminal of the first unidirectional conduction element is connected to one terminal of the first energy storage element and the control terminal of the first switching transistor, another terminal of the first energy storage element is grounded, and the first energy storage element is configured to store energy based on the first level signal to drive the first switching transistor to turn on.

In the technical solution of this embodiment of this application, an embodiment of the enabling module is provided. Under the condition that the first detection signal is, for example, a PWM signal, the first energy storage element stores energy and filters, and the control terminal of the first switching transistor can maintain a stable level above a certain frequency and duty cycle of the PWM signal, so that the first switching transistor can be turned on to output the first detection signal. Additionally, during the low-level stage of the PWM signal, the first unidirectional conduction element can prevent the voltage at the control terminal of the first switching transistor from being pulled down by the input and failing to provide the first detection signal of a sufficient duration, thereby causing the enabling circuit to fail to enable the wake-up chip to activate.

In some embodiments, the detection module further includes a voltage stabilizing element. The voltage stabilizing element is connected to the control terminal of the first switching transistor and is configured to stabilize the voltage at the control terminal of the first switching transistor.

In the technical solution of this embodiment of this application, when the voltage input to the control terminal of the first switching transistor exceeds a certain value, the voltage stabilizing element activates to work and clamps the voltage at the control terminal of the first switching transistor at a certain value to protect the first switching transistor from being damaged. A maximum clamping voltage of the voltage stabilizing element selected should be less than a breakdown voltage from the control terminal to the second terminal of the first switching transistor.

In some embodiments, the detection module further includes a second detection port and a second unidirectional conduction element. The second unidirectional conduction element is forward connected between the second detection port and the control terminal of the first switching transistor.

In the technical solution of this embodiment of this application, the second detection port may be configured to access level signals or PWM signals, provides another channel for waking up or hibernating the BMS. The second unidirectional conduction element has a similar function to the first unidirectional conduction element.

In some embodiments, the enabling module includes a second energy storage element, a second switching transistor, a second resistor, and a third resistor; where
one terminal of the second energy storage element is connected to an output of the detection module, a second terminal of the second energy storage element is connected to a control terminal of the second switching transistor, a first terminal of the second switching transistor is connected to a second power source, a second terminal of the second switching transistor is grounded through the third resistor, the second terminal of the second switching transistor is also connected to a first enabling pin of the wake-up chip, and the second resistor is connected between the control terminal and the second terminal of the second switching transistor; and
the second switching transistor is turned on based on the first detection signal to output the enabling level, and after the second energy storage element is charged, based on the first detection signal, for a preset duration using the first power source through the first resistor, the second switching transistor is turned off to stop outputting the enabling level.

In the technical solution of this embodiment of this application, when the first switching transistor is turned on, based on a principle that a voltage across the second energy storage element, for example, a capacitor, does not change abruptly, the control terminal of the second switching transistor presents a low level and turns on, so as to output the enabling level. Meanwhile, the second power source charges the second energy storage element, so that the voltage rises until the second switching transistor is turned off to stop outputting the enabling level. By configuring a preset duration for the charging process of the second energy storage element, the second switching transistor can be turned on in a certain time window to output the enabling level to enable the wake-up chip to activate, so as to wake up the BMS in a sleeping state.

In some embodiments, the enabling module further includes a third unidirectional conduction element. The third unidirectional conduction element is forward connected between the second terminal of the second switching transistor and the first enabling pin of the wake-up chip. This prevents a voltage from another wake-up source jointly using the first enabling pin of the wake-up chip from being connected in series and affecting the normal working of the enabling module.

In some embodiments, the control circuit includes one of control chips in the BMS, and a self-locking pin of the control chip is connected to a second enabling pin of the wake-up chip to provide the self-locking signal.

In the technical solution of this embodiment of this application, the enabling circuit and the control circuit are connected to different pins of the wake-up chip, so that the control of the enabling level to the wake-up chip and the control of the self-locking signal to the wake-up chip are independent of each other, and thus the wake-up chip can be turned off after the self-locking signal is canceled, allowing to enter sleep, thereby reducing lead-acid consumption of the battery.

In some embodiments, the wake-up chip is a power source chip for supplying power to the BMS, or a control chip for controlling the BMS to sleep or wake up.

In some embodiments, the first level signal includes a high-level signal and a PWM signal.

This can make the level-triggered and/or edge-triggered power source chip and the control chip compatible, so that the level-triggered and/or edge-triggered BMS can also be awakened and enter sleep when the charging device is plugged in.

In some embodiments, the control circuit includes one of control chips in the BMS. This facilitates system configuration.

According to a second aspect, an embodiment of this application provides a BMS sleep wake-up method, including:
when a charging device is plugged in, generating an enabling level of a preset duration based on a first level signal provided by the charging device to enable a wake-up chip of a BMS to activate to wake up the BMS;
generating a self-locking signal within the preset duration to maintain the wake-up chip in an activated state; and
under the condition that a sleep signal is received, stopping outputting the self-locking signal to turn off the wake-up chip, allowing the BMS to enter sleep.

In the technical solution of this embodiment of this application, when the charging device is plugged in, the BMS may generate the enabling level of the preset duration based on the first level signal provided by the charging device, where the enabling level of the preset duration enables the wake-up chip to activate to wake up the BMS, and output the self-locking signal to keep the wake-up chip waking up the BMS. Additionally, under the condition that the charging device remains plugged in, as the enabling level is maintained for only the preset duration, when sleep is needed later, the self-locking signal needs to be canceled, and then the wake-up chip is turned off, so that the BMS can enter sleep, solving the problem in related art that the BMS cannot enter a sleeping state unless the charging device is unplugged. Furthermore, as the generated enabling level generates an edge signal, the wake-up chip triggered by either an edge or a level can meet the requirement of being able to allow the BMS to enter sleep while the charging device remains plugged in, thereby reducing lead-acid consumption of the battery.

In some embodiments, the first level signal includes a high-level signal and a PWM signal.

In the technical solution of this embodiment of this application, the BMS can be triggered by both a level and an edge, so that the level-triggered and/or edge-triggered BMS can also be awakened and enter sleep when the charging device is plugged in.

According to a third aspect, an embodiment of this application provides a BMS, including the foregoing BMS sleep wake-up circuit.

In the technical solution of this embodiment of this application, when the charging device is plugged in, the BMS can enable, for a period of time based on a level signal provided by the charging device, the wake-up chip to activate to wake up the BMS in a sleeping state, and the awakened BMS outputs a self-locking signal to keep activating the wake-up chip. Additionally, under the condition that the charging device remains plugged in, as the enabling level is maintained for only the preset duration, when sleep is needed later, the self-locking signal needs to be canceled, so that the BMS can enter a sleeping state, solving the problem that the BMS cannot enter a sleeping state unless the charging device is unplugged, thereby reducing lead-acid consumption of the battery.

According to a fourth aspect, an embodiment of this application provides an electric device, including a battery and the foregoing BMS.

In the technical solution of this embodiment of this application, when the charging device is plugged in, the electric device can enable, for a period of time based on the signal provided by the charging device, the wake-up chip to activate to wake up the BMS in a sleeping state of the electric device, and the awakened BMS outputs a self-locking signal to keep activating the wake-up chip. Additionally, under the condition that the charging device remains plugged in, as the enabling level is maintained for only the preset duration, when sleep is needed later, the self-locking signal needs to be canceled, so that the BMS can enter a sleeping state, solving the problem that the BMS cannot enter a sleeping state unless the charging device is unplugged, thereby reducing lead-acid consumption of the battery.

The foregoing description is merely an overview of the technical solution of this application. To more clearly understand the technical means in this application so that they can be implemented according to the content of the specification, and to make the foregoing and other objectives, features, and advantages of this application more obvious and easier to understand, the following describes specific embodiments of this application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit this application. In addition, in all the accompanying drawings, same parts are denoted by same reference signs. In the accompanying drawings:
FIG. 1 is a module diagram of a BMS sleep wake-up circuit according to some embodiments of this application;
FIG. 2 is a module diagram of a BMS sleep wake-up circuit according to some embodiments of this application;
FIG. 3 is a circuit diagram of a BMS sleep wake-up circuit according to some embodiments of this application; and
FIG. 4 is a flowchart of a BMS sleep wake-up method according to some embodiments of this application.

Reference signs in specific embodiments are as follows:
charging device 10; communication interface 11; first detection port 110; second detection port 112; enabling circuit 120; detection module 122; enabling module 124; control circuit 130; sampling circuit 140; wake-up chip 200;
first switching transistor Q1; second switching transistor Q2; first energy storage element C1; second energy storage element C2; first resistor R1; second resistor R2; third resistor R3; bleeder resistor R11; current-limiting resistor R12; first enabling pin EN1; second enabling pin EN2; first unidirectional conduction element D1; second unidirectional conduction element D2; third unidirectional conduction element D3; voltage stabilizing element Z1; first power source V1; and second power source V2.

### DESCRIPTION OF EMBODIMENTS

The following describes in detail the embodiments of technical solutions of this application with reference to the accompanying drawings. The following embodiments are merely intended for a clearer description of the technical solutions of this application and therefore are used as just examples which do not constitute any limitations on the protection scope of this application.

Unless otherwise defined, all technical and scientific terms used herein shall have the same meanings as commonly understood by those skilled in the art to which this application relates. The terms used herein are intended to merely describe the specific embodiments rather than to limit this application. The terms "include/comprise" and "have" and any other variations thereof in the specification, claims, and brief description of drawings of this application are intended to cover non-exclusive inclusions.

In the description of the embodiments of this application, the technical terms "first", "second" and the like are merely intended to distinguish between different objects, and shall not be understood as any indication or implication of relative importance or any implicit indication of the number, specific sequence, or primary-secondary relationship of the technical features indicated. In the description of the embodiments of this application, "a plurality of" means at least two unless otherwise specifically stated.

In this specification, reference to "embodiment" means that specific features, structures or characteristics described with reference to the embodiment may be incorporated in at least one embodiment of this application. The word "embodiment" appearing in various places in this specification does not necessarily refer to the same embodiment or an independent or alternative embodiment that is exclusive of other embodiments. Persons skilled in the art explicitly and implicitly understand that the embodiments described herein may be combined with other embodiments.

In the descriptions of the embodiments of this application, the term "and/or" is only an associative relationship for describing associated objects, indicating that three relationships may be present. For example, A and/or B may indicate the following three cases: presence of only A, presence of both A and B, and presence of only B. In addition, a character "/" in this specification generally indicates an "or" relationship between contextually associated objects.

In the descriptions of the embodiments of this application, the term "a plurality of" means more than two (inclusive). Similarly, "a plurality of groups" means more than two (inclusive) groups, and "a plurality of pieces" means more than two (inclusive) pieces.

In the description of the embodiments of this application, the orientations or positional relationships indicated by the technical terms "center", "longitudinal", "transverse", "length", "width", "thickness", "upper", "lower", "front", "rear", "left", "right", "vertical", "horizontal", "top", "bottom", "inside", "outside", "clockwise", "counterclockwise", "axial", " radial", "circumferential", and the like are based on the orientations or positional relationships as shown in the accompanying drawings. These terms are merely for ease and brevity of description of the embodiments of this application rather than indicating or implying that the means or components mentioned must have specific orientations or must be constructed or manipulated according to specific orientations, and therefore shall not be construed as any limitation on the embodiments of this application.

In the description of the embodiments of this application, unless otherwise specified and defined explicitly, the technical terms "mounting", "connection", "joining", and "fastening" should be understood in their general senses. For example, they may refer to a fixed connection, a detachable connection, or an integral connection, may refer to a mechanical connection or an electrical connection, and may refer to a direct connection, an indirect connection via an intermediate medium, an internal communication between two elements, or an interaction between two elements. Persons of ordinary skill in the art can understand specific meanings of these terms in this application as appropriate to specific situations.

A charging wake-up function is often used in conjunction with an edge-triggered wake-up function of a wake-up chip. However, currently, many application chips do not support edge wake-up. Based on this, the inventive concept of this application is to allow a wake-up chip used in a charging wake-up function to have a basic level wake-up function, and certainly also to allow it to be compatible with an edge-triggered wake-up function. Specifically, the embodiments of this application mainly introduce an inventive concept for an interface of a charging device (such as a charging gun) being a BMS interface circuit from which a high-level or pulse width modulation (Pulse Width Modulation, PWM) signal is input, supporting wake-up upon connection, and also supporting sleep without unplugged. A wake-up channel of the wake-up chip used (such as a power source chip or other chips with wake-up functions) needs to have only a level or edge wake-up function.

For example, new energy electric vehicle products support waking up by plugging the charging gun into the interface of the charging gun being a communication interface (such as the AC_CP interface that provides power transmission signals) from which a high level is input, and also supports, under the control of the BMS, achieving sleep without unplugging the gun while the charging gun remains plugged in, so that after charging is completed or stopped, the BMS can enter sleep, saving energy and reducing the lead-acid consumption of the entire vehicle.

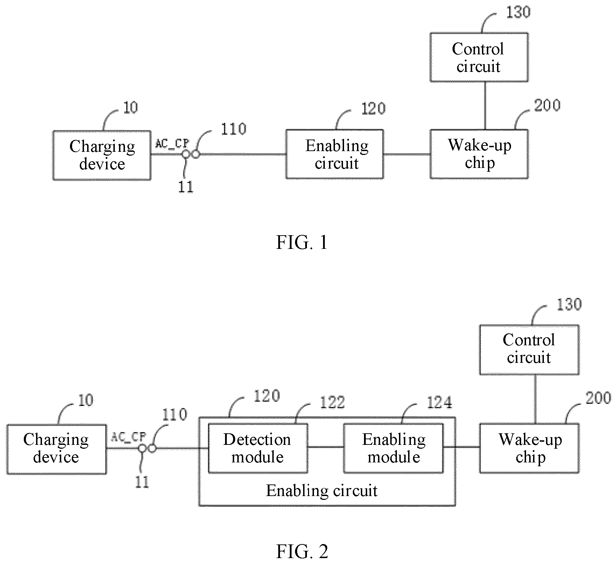

Referring to FIG. 1. FIG. 1 is a module diagram of a BMS sleep wake-up circuit according to some embodiments of this application. The BMS sleep wake-up circuit includes a first detection port 110, an enabling circuit 120, and a control circuit 130.

The first detection port 110 is configured to be connected to a communication interface 11 of a charging device 10 when the charging device 10 is plugged in. The enabling circuit 120 is connected to the first detection port 110 and a wake-up chip 200 of a BMS, and generates an enabling level of a preset duration based on a first level signal provided by the charging device 10 to enable the wake-up chip 200 to activate to wake up the BMS in a sleeping state. The control circuit 130 is configured to output a self-locking signal to the wake-up chip 200 to maintain the wake-up chip 200 in an activated state after the BMS is awakened, and further configured to, under the condition that a sleep signal is received, stop outputting the self-locking signal to turn off the wake-up chip 200, allowing the BMS to enter a sleeping state, solving the problem in related art that the BMS cannot enter a sleeping state unless the charging device 10 is unplugged, thereby reducing lead-acid consumption of the battery.

The charging device 10 may be a charging gun or a general charging adapter available on the market. The communication interface 11 of the charging device 10 may be an AC_CP interface of the charging gun or a communication interface of the charging adapter. The charging gun is used as an example. After the charging gun is connected to the charging interface, a power transmission signal output to a charging interface through the communication interface 11 (that is, the AC_CP interface) first enters a connection stage of the charging gun. During this stage, the first rising edge appears, and the power transmission signal maintains a high level for a preset duration. Afterward, the power transmission signal enters a pulse variation stage for data communication (that is, PWM signal). During this pulse variation stage, the charging gun outputs charging power to the charging interface. After charging is completed, the power transmission signal returns to a high level.

It is understood that when the charging gun is plugged in, the first detection port 110 is connected to the communication interface 11 of the charging device 10, and receives the first level signal provided by the communication interface 11 of the charging device 10, for example, a high-level or PWM signal. Conversely, when the charging device 10 is not plugged in, the first detection port 110 is at a low level, which may also be a second level signal.

It is understood that an edge signal is inevitably generated during the generation of the enabling level. For example, the enabling circuit 120 generates the enabling level of the preset duration based on the first level signal, which is a high level and must also include a rising edge and a falling edge. In this case, the wake-up chip 200 of the BMS may be enabled by either a high level or a rising edge to activate. The control circuit 130 is part of the BMS. When the BMS in sleeping state is awakened, the control circuit 130 is activated. Therefore, after the wake-up chip 200 is activated, the BMS in sleeping state is awakened. The control circuit 130 outputs the self-locking signal to maintain the wake-up chip 200 in an activated state, so that the wake-up chip 200 keeps waking up the BMS for working, thus completing the wake-up process of the BMS in sleeping state. It should be understood that, to maintain the wake-up chip 200 in an activated state, the self-locking signal should be generated within the preset duration.

Afterwards, after the preset duration, for example, when charging is completed and stopped, to reduce lead-acid consumption of the battery, as the enabling level has stopped being output, the wake-up chip 200 can be turned off by directly stopping outputting the self-locking signal to allow the BMS to enter a sleeping state. This BMS wake-up and sleep control method can be applicable to the wake-up chip 200 triggered by a level and/or an edge.

When the charging device 10 is plugged in, the enabling circuit 120 determines, by detecting the first level signal, the enabling level of the preset duration when the charging device 10 is plugged in, to enable the wake-up chip 200 to activate to wake up the BMS in a sleeping state, and the control circuit 130 outputs a self-locking signal to keep the wake-up chip 200 activated for the BMS. Additionally, when the charging device 10 remains plugged in, as the enabling level is maintained for only the preset duration, when sleep is needed later, the self-locking signal needs to be canceled, and then the wake-up chip 200 is turned off, so that the BMS can enter a sleeping state, solving the problem that the BMS cannot enter sleep unless the charging device 10 is unplugged. Furthermore, as the generated enabling level will inevitably generate an edge signal, the wake-up chip 200 can, where triggered by an edge or a level, allow the BMS to enter sleep while keeping the charging device 10 plugged in, thereby reducing lead-acid consumption of the battery.

In some embodiments, referring to FIG. 2, FIG. 2 is a module diagram of a BMS sleep wake-up circuit according to some embodiments of this application.

The enabling circuit 120 includes a detection module 122 and an enabling module 124. The detection module 122 is connected to the first detection port 110 and is configured to output a first detection signal based on the first level signal provided by the charging device 10. The enabling module 124 is connected to the detection module 122 and is configured to generate the enabling level of the preset duration based on the first detection signal. The enabling level is output to the wake-up chip 200 of the BMS to enable the wake-up chip 200 to activate to wake up the BMS.

It should be understood that when the charging gun is unplugged, the detection module 122 is further configured to detect a second level signal (low level) and output a second detection signal (high level). The enabling module 124 is further configured to receive the second detection signal and stop outputting the enabling level (high level or rising edge). At this point, a low level is output. For the wake-up chip 200 triggered by a high level or rising edge, the low level cannot enable and activate a wake-up signal. This circuit design is simple and reliable.

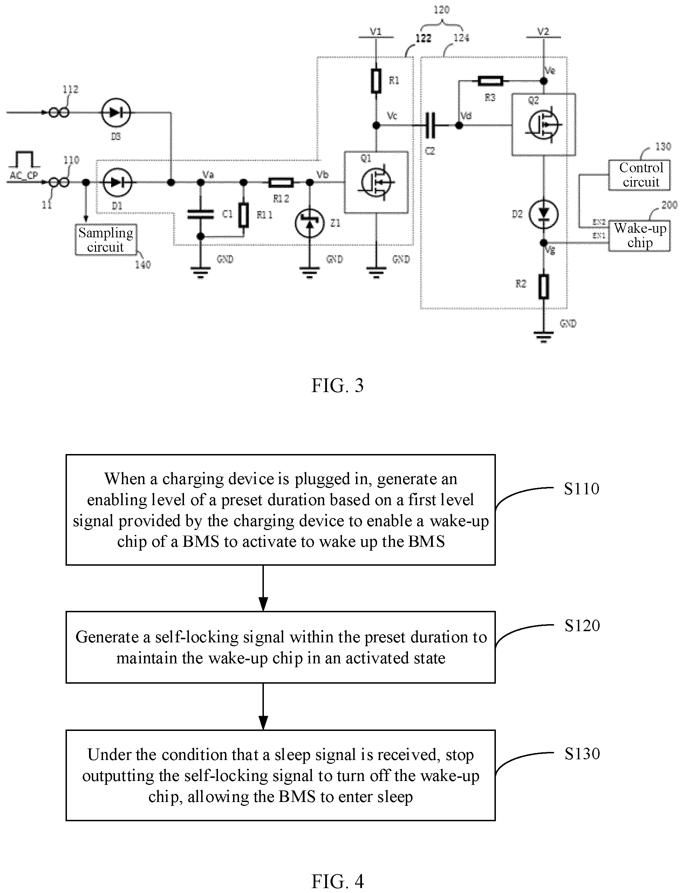

In some embodiments, referring to FIG. 3, FIG. 3 is a circuit diagram of a BMS sleep wake-up circuit according to some embodiments of this application. The detection module 122 includes a first switching transistor Q1 and a first resistor R1. A control terminal of the first switching transistor Q1 is connected to the first detection port 110. A first terminal of the first switching transistor Q1 is connected to a first power source V1 through the first resistor R1. A second terminal of the first switching transistor Q1 is grounded. The first terminal of the first switching transistor Q1 is connected to the enabling module 124. The first switching transistor Q1 outputs a first detection signal under the driving of the first level signal.

For example, the first switching transistor Q1 may be a semiconductor transistor that is turned on by a high level, for example, an N-channel MOS tube or IGBT. The control terminal, first terminal, and second terminal of the first switching transistor Q1 are respectively a gate, drain, and source of the MOS tube. When the first level signal (such as a high-level signal) is input to the first detection port 110, a voltage Vb at the control terminal of the first switching transistor Q1 presents a certain voltage, which is used to drive the first switching transistor Q1 to switch on or off, thereby pulling a voltage Vc at the first terminal of the first switching transistor Q1 down to ground, that is, outputting the first detection signal to the enabling module 124. This embodiment provides an implementation of the detection module 122, which has the advantages of simple circuit structure, reliability, and low costs.

In some embodiments, referring to FIG. 3, the detection module 122 further includes a first energy storage element C1 and a first unidirectional conduction element D1. An input terminal of the first unidirectional conduction element D1 is connected to the first detection port 110. An output terminal of the first unidirectional conduction element D1 is connected to one terminal of the first energy storage element C1 and the control terminal of the first switching transistor Q1. Another terminal of the first energy storage element C1 is grounded. The first energy storage element C1 is configured to store energy based on the first level signal to drive the first switching transistor Q1 to turn on.

For example, the first energy storage element C1 may be an energy storage capacitor, and the first unidirectional conduction element D1 may be a diode. Under the condition that the first detection signal is, for example, a PWM signal, the first energy storage element C1 stores energy and filters it, so that the control terminal of the first switching transistor Q1 can maintain a stable level above a certain frequency and duty cycle of the PWM signal, allowing the first switching transistor Q1 to turn on and output the first detection signal, thereby triggering the enabling module 124 to output the enabling level of the preset duration.

Additionally, during the low-level stage of the PWM signal, the first unidirectional conduction element D1 can prevent a voltage at the control terminal of the first switching transistor Q1 from being pulled down by the input, failing to provide the first detection signal of a sufficient duration, thereby causing the enabling circuit 120 to fail to enable the wake-up chip 200 to activate.

In some embodiments, the first energy storage element C1 is further connected in parallel with a bleeder resistor R11. A bleeder circuit consisting of the first energy storage element C1 and the bleeder resistor R11 can maintain the voltage Vb at the control terminal of the first switching transistor Q1 under a certain frequency and duty cycle of the PWM signal input, thereby allowing the first switching transistor Q1 to turn on to provide the first detection signal.

In some embodiments, referring to FIG. 3, the detection module 122 further includes a voltage stabilizing element Z1. The voltage stabilizing element Z1 is connected to the control terminal of the first switching transistor Q1 and is configured to stabilize the voltage at the control terminal of the first switching transistor Q1.

For example, the voltage stabilizing element Z1 may be a voltage stabilizing diode, with its cathode connected to the control terminal of the first switching transistor Q1 and its anode grounded. The voltage stabilizing diode may start to work when a voltage input to the control terminal of the first switching transistor Q1 exceeds a certain value, and clamp the voltage Vb at the control terminal of the first switching transistor Q1 at a certain value to protect the first switching transistor Q1 from being damaged. A maximum clamping voltage of the voltage stabilizing element Z1 selected should be less than a breakdown voltage from the control terminal of the first switching transistor Q1 to the second terminal of the first switching transistor Q1.

In some embodiments, a current-limiting resistor R12 is connected between the cathode of the voltage stabilizing element Z1 and the bleeder resistor R11. The current-limiting resistor R12 plays a current limiting role in this circuit. During working, the voltage stabilizing element Z1 can limit the circuit current and protect the related components in the circuit.

In some embodiments, the BMS wake-up and sleep circuit further includes a second detection port 112 and a second unidirectional conduction element D2. The second unidirectional conduction element D2 is forward connected between the second detection port 112 and the control terminal of the first switching transistor Q1. The second detection port 112 may be used to receive other wake-up source level signals or PWM signals, and provides another channel for waking up or hibernating the BMS. The second unidirectional conduction element D2 may be a diode, and functions similarly to the first unidirectional conduction element D1 mentioned above.

In some embodiments, the enabling module 124 includes a second energy storage element C2, a second switching transistor Q2, a second resistor R2, and a third resistor R3. One terminal of the second energy storage element C2 is connected to an output of the detection module 122. A second terminal of the second energy storage element C2 is connected to a control terminal of the second switching transistor Q2. A first terminal of the second switching transistor Q2 is connected to the second power source. The second terminal of the second switching transistor Q2 is grounded through the third resistor R3. The second terminal of the second switching transistor Q2 is also connected to the first enabling pin EN1 of the wake-up chip 200. The second resistor R2 is connected between the control terminal and the second terminal of the second switching transistor Q2. The second switching transistor Q2 is turned on based on the first detection signal to output the enabling level, the second energy storage element C2 is charged for a preset duration based on the first detection signal using the first power source through the second resistor R2, and then the second switching transistor Q2 is turned off to stop outputting the enabling level.

The second energy storage element C2 may be a capacitor. The second switching transistor Q2 may be a semiconductor transistor that is turned on at a low level, for example, a P-channel MOS tube or IGBT. The control terminal, first terminal, and second terminal of the second switching transistor Q2 are respectively a gate, source, and drain of the MOS tube.

When the first switching transistor Q1 is turned on, based on a principle that a voltage across the second energy storage element (capacitor) C2 does not change abruptly, a voltage Vd at the control terminal of the second switching transistor Q2 is pulled down to ground, so that the control terminal is turned on and outputs the enabling level (including high-level signal and rising edge signal). Meanwhile, the second power source V2 charges the second energy storage element C2, and the voltage Vd at the control terminal of the second switching transistor Q2 rises until the second switching transistor Q2 is turned off to stop outputting the enabling level. By configuring a preset duration for the charging process of the second energy storage element C2, the second switching transistor Q2 can be turned on in a certain time window to output the enabling level to enable the wake-up chip 200 to activate, so as to wake up the BMS in a sleeping state.

In some embodiments, the enabling module 124 further includes a third unidirectional conduction element D3. The third unidirectional conduction element D3 is forward connected between the second terminal of the second switching transistor Q2 and the first enabling pin EN1 of the wake-up chip 200. The third unidirectional conduction element D3 may be a diode, and is used for preventing a voltage of another wake-up source jointly using the first enabling pin EN1 of the wake-up chip 200, for example, a controller of the BMS, from being connected in series and thus affecting the normal working of the enabling module 124.

The first power source V1 and the second power source V2 may be common power sources on the BMS board, typically 3.3 volts (V) or 5 V, or may be level power sources suitable for the system.

In some embodiments, referring to FIG. 3, the control circuit 130 includes one of control chips in the BMS, and a locking pin of the control chip is connected to the second enabling pin EN2 of the wake-up chip 200 to provide the self-locking signal.

The enabling circuit 120 and the control circuit 130 are connected to different enabling pins of the wake-up chip 200, so that the control of the enabling level to the wake-up chip 200 and the control of the self-locking signal to the wake-up chip 200 are independent of each other. This enables the activated wake-up chip 200 to be locked by the self-locking signal output by the controller, allowing the wake-up chip 200 to be turned off after the self-locking signal is canceled, allowing to enter sleep, thereby reducing lead-acid consumption of the battery.

In some embodiments, the wake-up chip 200 is a power source chip for supplying power to the BMS, or a control chip for controlling the BMS to sleep or wake up.

It can be understood that the wake-up chip 200 is a component in the BMS. An external high-level signal or rising edge signal enables and activates the wake-up chip 200 through the first enabling pin EN1, and then activates the entire BMS to start working. For example, a power source chip with level and/or rising edge signal wake-up function, when receiving an external level signal (such as high level), outputs a voltage required by a back-end load, thereby allowing the entire BMS to start working. For example, a control chip with level and/or rising edge signal wake-up function, when receiving an external level signal (such as high level), outputs a control signal of controlling the activation of the power source module, allowing the power source module to output a voltage required by a back-end load, thereby allowing the entire BMS to start working.

The BMS sleep wake-up circuit of this embodiment of this application can be compatible with a level-triggered and/or edge-triggered power source chip and control chip, so that the level-triggered and/or edge-triggered BMS can also be awakened and enter sleep when the charging device 10 is plugged in.

In some embodiments, the control circuit 130 and the wake-up chip 200 are a same control chip. During working, after the control chip is enabled and activated by receiving the enabling level of the preset duration through the first enabling pin EN1, the control chip generates a self-locking signal to the second enabling pin EN2 to maintain the working state. After the preset duration, the wake-up chip 200 can be turned off after the self-locking signal is canceled, allowing the BMS to enter sleep.

In some embodiments, referring to FIG. 3, the BMS sleep wake-up circuit further includes a sampling circuit 140 connected to the first detection port 110 and the control circuit 130. The sampling circuit 140 is configured to output an unplugged signal when detecting that the detection port 110 is not connected to the charging device 10.

In some embodiments, the sampling circuit 140 can also be connected to the second detection port 112. The sampling circuit 140 is to detect a plugging signal (for example, an AC_CP interface) of the charging gun and identify a level or PWM status, and is configured to identify a wake-up source (such as the charging gun) or a charging status. The unplugging signal may be a level signal, which is not limited herein. The control circuit 130 may cancel the self-locking signal based on the plugging signal, thereby turning off the wake-up chip 200 and allowing the BMS to enter sleep.

In some embodiments, referring to FIG. 3, when the charging device 10 is not plugged in, that is, the AC_CP interface exemplified in FIG. 1 is not connected, at this point, Va=Vb=0V (that is, Vb < a gate-source threshold voltage Vgsth of Q1), the first switching transistor Q1 is in a cut-off state, a voltage across the second energy storage element C2 is stable, Vd=Ve=V2, and the second switching transistor Q2 is in a cut-off state (that is, Vd-Ve > Vgsth of Q2). At this point, Vg is a low level, and the BMS in a sleeping state is not awakened or activated.

When the charging gun is plugged in, that is, the AC_CP interface exemplified in FIG. 1 is connected, due to the input of high level (or PWM signal) from the charging interface, Vb=Va changes from low level to high level (due to the cutoff of reverse current by the first unidirectional conduction element D1, combined with the large-capacitance first energy storage element C1 and the slow voltage discharge of the large-resistance bleeder resistor R11, Va can be maintained at a high level under the input of a PWM signal at a certain frequency). At this point, the first switching transistor Q1 is turned on (Vb > Vgsth of Q1), the voltage Vc is pulled down to 0 V. Due to the characteristic that the voltage across the second energy storage element C2 cannot change abruptly (capacitor characteristic), Vd is also pulled down to 0 V (the recovery time from Vd to V2 is a charging time of the capacitor C2 through the third resistor R3). At this point, Vd-e presents a certain voltage so that the second switching transistor Q2 is turned on (Vd-Ve < Vgsth of Q2). At this point, Vg changes from low level to high level, that is, the first enabling pin EN1 of the wake-up chip 200 changes from low to high, triggering the level or edge wake-up function of the wake-up chip 200, activating the BMS in a sleeping state to start working. The control circuit 130 (for example, MCU) that starts working outputs the self-locking signal to keep activating the wake-up chip 200, so as to keep the BMS in the awakened state.

In the state where the charging gun remains plugged in, the first switching transistor Q1 is always in an on state, so the voltage across the second energy storage element C2 also returns to a stable state, and the Vd voltage is restored, that is, Vd=Ve=V2. The second switching transistor Q2 also returns to an off state (that is, Vd-Ve > Vgsth of Q2), and Vg is at a low level. At this point, the control circuit 130 may cancel the output self-locking signal to allow the BMS to enter a sleeping state.

Thus, a working process of the wake-up and sleep function for the charging interface with an external input being a high level or PWM signal is completed.

According to a second aspect, referring to FIG. 4, FIG. 4 is a flowchart of a BMS sleep wake-up method according to some embodiments of this application with reference to FIG. 1 to FIG. 3. An embodiment of this application provides a BMS sleep wake-up method, including the following steps.

Step S110. When a charging device is plugged in, generate an enabling level of a preset duration based on a first level signal provided by the charging device to enable a wake-up chip of a BMS to activate to wake up the BMS.

Step S120. Generate a self-locking signal within the preset duration to maintain the wake-up chip in an activated state.

Step S130. Under the condition that a sleep signal is received, stop outputting the self-locking signal to turn off the wake-up chip, allowing the BMS to enter sleep.

In the technical solution of this embodiment of the application, when the charging device 10 is plugged in, the BMS can generate the enabling level based on the first level signal provided by the charging device 10 to enable the wake-up chip 200 to activate to wake up the BMS in a sleeping state, and outputs the self-locking signal to keep the wake-up chip 200 activating the BMS. Additionally, when the charging device 10 remains plugged in, after the preset duration, the wake-up chip 200 is turned off after the self-locking signal is canceled, allowing the BMS to enter a sleeping state, solving the problem in related art that the BMS cannot enter a sleeping state unless the charging device 10 is unplugged. Furthermore, as the generated enabling level generates an edge signal, the wake-up chip 200 triggered by either an edge or a level can meet the requirement of being able to allow the BMS to enter sleep while keeping the charging device 10 plugged in, thereby reducing lead-acid consumption of the battery.

In some embodiments, the first level signal includes a high-level signal and a PWM signal.

In the technical solution of this embodiment of the application, the BMS can be triggered by both a level and/or an edge, so that the level-triggered and/or edge-triggered BMS can also achieve waking up and sleeping when the charging device 10 is plugged in.

According to a third aspect, referring to FIG. 3, this application provides a BMS, including the foregoing BMS sleep wake-up circuit.

In the technical solution of this embodiment of the application, when a charging device 10 is plugged in, the BMS can generate an enabling level of a preset duration based on a level signal provided by the charging device 10 to enable the wake-up chip 200 to activate to wake up the BMS in a sleeping state. The awakened BMS outputs a self-locking signal to keep activating the wake-up chip 200. Additionally, when the charging device 10 remains plugged in, the BMS can enter a sleeping state after the self-locking signal is canceled, solving the problem that the BMS cannot enter a sleeping state unless the charging device 10 is unplugged, thereby reducing lead-acid consumption of the battery.

According to a fourth aspect, this application provides an electric device, including a battery and the foregoing BMS.

The electric device may be a new energy electric vehicle, a cleaning robot, an energy storage device, or the like. In the technical solution of this embodiment of the application, when a charging device 10 is plugged in, the electric device can generate an enabling level based on a level signal provided by the charging device 10 to enable the wake-up chip 200 to activate to wake up the BMS of the electric device. The awakened BMS outputs a self-locking signal to keep activating the wake-up chip 200. Additionally, when the charging device 10 remains plugged in, the BMS can enter sleep after the self-locking signal is canceled, solving the problem that the BMS cannot enter a sleeping state unless the charging device 10 is unplugged, thereby reducing lead-acid consumption of the battery.

The foregoing description is merely an overview of the technical solution of this application. To more clearly understand the technical means in this application so that they can be implemented according to the content of the specification, and to make the foregoing and other objectives, features, and advantages of this application more obvious and easier to understand, the following describes specific embodiments of this application.

In conclusion, it should be noted that the foregoing embodiments are for description of the technical solutions of this application only rather than for limiting this application. Although this application has been described in detail with reference to the foregoing embodiments, persons of ordinary skill in the art should appreciate that they can still make modifications to the technical solutions described in the embodiments or make equivalent replacements to some or all technical features thereof without departing from the scope of the technical solutions of the embodiments of this application. All such modifications and equivalent replacements shall fall within the scope of claims and specification of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. A BMS sleep wake-up circuit, comprising:
a first detection port configured to be connected to a communication interface of a charging device when the charging device is plugged in;
an enabling circuit connected to the first detection port and a wake-up chip of a BMS, and configured to, when the charging device is plugged in, generate an enabling level of a preset duration based on a first level signal provided by the charging device, to enable the wake-up chip to activate to wake up the BMS in a sleeping state; and
a control circuit configured to, after the BMS is awakened, output a self-locking signal to the wake-up chip to maintain the wake-up chip in an activated state, and further configured to, under the condition that a sleep signal is received, stop outputting the self-locking signal to turn off the wake-up chip, allowing the BMS to enter a sleeping state.

2. The BMS sleep wake-up circuit according to claim 1, wherein the enabling circuit comprises:
a detection module connected to the first detection port, and configured to output a first detection signal based on the first level signal provided by the charging device; and
an enabling module connected to the detection module, and configured to generate the enabling level of a preset duration based on the first detection signal and output the enabling level.

3. The BMS sleep wake-up circuit according to claim 2, wherein the detection module comprises a first switching transistor and a first resistor, wherein a control terminal of the first switching transistor is connected to the first detection port, a first terminal of the first switching transistor is connected to a first power source through the first resistor, a second terminal of the first switching transistor is grounded, the first terminal of the first switching transistor is connected to the enabling module, and the first switching transistor outputs the first detection signal under the driving of the first level signal.

4. The BMS sleep wake-up circuit according to claim 3, wherein the detection module further comprises a first energy storage element and a first unidirectional conduction element, wherein an input terminal of the first unidirectional conduction element is connected to the first detection port, an output terminal of the first unidirectional conduction element is connected to one terminal of the first energy storage element and the control terminal of the first switching transistor, another terminal of the first energy storage element is grounded, and the first energy storage element is configured to store energy based on the first level signal to drive the first switching transistor to turn on.

5. The BMS sleep wake-up circuit according to claim 3, wherein the detection module further comprises a voltage stabilizing element, wherein the voltage stabilizing element is connected to the control terminal of the first switching transistor, and is configured to stabilize a voltage at the control terminal of the first switching transistor.

6. The BMS sleep wake-up circuit according to claim 4, wherein the detection module further comprises a second detection port and a second unidirectional conduction element, wherein the second unidirectional conduction element is forward connected between the second detection port and the control terminal of the first switching transistor.

7. The BMS sleep wake-up circuit according to any one of claims 2 to 6, wherein the enabling module comprises a second energy storage element, a second switching transistor, a second resistor, and a third resistor; wherein
one terminal of the second energy storage element is connected to an output of the detection module, a second terminal of the second energy storage element is connected to a control terminal of the second switching transistor, a first terminal of the second switching transistor is connected to a second power source, a second terminal of the second switching transistor is grounded through the third resistor, the second terminal of the second switching transistor is also connected to a first enabling pin of the wake-up chip, and the second resistor is connected between the control terminal and the second terminal of the second switching transistor; and
the second switching transistor is turned on based on the first detection signal to output the enabling level, and after the second energy storage element is charged, based on the first detection signal, for a preset duration using the first power source through the second resistor, the second switching transistor is turned off to stop outputting the enabling level.

8. The BMS sleep wake-up circuit according to claim 7, wherein the enabling module further comprises a third unidirectional conduction element, wherein the third unidirectional conduction element is forward connected between the second terminal of the second switching transistor and the first enabling pin of the wake-up chip.

9. The BMS sleep wake-up circuit according to claim 7, wherein the control circuit comprises one of control chips in the BMS, and a self-locking pin of the control chip is connected to a second enabling pin of the wake-up chip to provide the self-locking signal.

10. The BMS sleep wake-up circuit according to claim 1, wherein the wake-up chip is a power source chip for supplying power to the BMS, or a control chip for controlling the BMS to sleep or wake up.

11. The BMS sleep wake-up circuit according to claim 1, wherein the first level signal comprises a high-level signal or a PWM signal.

12. The BMS sleep wake-up circuit according to claim 1, 9, or 10, wherein the control circuit and the wake-up chip are a same control chip.

13. A BMS sleep wake-up method, comprising:
when a charging device is plugged in, generating an enabling level of a preset duration based on a first level signal provided by the charging device to enable a wake-up chip of a BMS to activate to wake up the BMS;
generating a self-locking signal within the preset duration to maintain the wake-up chip in an activated state; and
upon receiving a sleep signal, stopping outputting the self-locking signal to turn off the wake-up chip, allowing the BMS to enter sleep.

14. The BMS sleep wake-up method according to claim 13, wherein the first level signal comprises a high-level signal or a PWM signal.

15. A BMS, comprising the BMS sleep wake-up circuit according to any one of claims 1 to 12.

16. An electric device, comprising a battery, and further comprising the BMS according to claim 15.
